# EUROPEAN PATENT APPLICATION

(11) **EP 4 625 260 A1**
(43) Date of publication of application: **01.10.2025**
(21) Application number: 24166344.2
(22) Date of filing: 26.03.2024
(51) Int. Cl.: G06N 3/094, G06N 3/096, G06N 20/00

(54) **COMPUTER-IMPLEMENTED METHOD FOR TESTING A ROBUSTNESS OF A PRE-TRAINED MODEL**

(71) Applicant: Siemens Aktiengesellschaft, 80333 München (DE)
(72) Inventor: Thon, Ingo, 85630 Grasbrunn (DE); Wu, Zhiliang, 81379 München (DE); Yang, Yinchong, 85579 Neubiberg (DE)
(74) Representative: Siemens Patent Attorneys

(57) **Abstract**

The invention relates to a computer-implemented method for testing a robustness of a pre-trained model, comprising the steps: a. providing the pre-trained model (S1); b. providing a plurality of tasks for the pre-trained model (S2); wherein c. each task of the plurality of tasks is assigned to at least one unperturbed evaluation result of a performance of the pre-trained model; wherein the pre-trained model is evaluated with at least one unperturbed data sample; wherein d. each task of the plurality of tasks is assigned to a plurality of perturbed evaluation results of the performance of the pre-trained model for different perturbation degrees; wherein the pre-trained model is evaluated with a plurality of perturbed data samples by different perturbation degrees; e. providing a first specified performance threshold (S3); f. providing a second specified performance threshold (S4); g. comparing each perturbed evaluation result of the plurality of perturbed evaluation results of the different perturbation degrees with the first specified performance threshold for each task of the plurality of tasks (S5); h. identifying any perturbed evaluation result of the plurality of perturbed evaluation results of the different perturbation degrees, which is lower than the first specified performance threshold for each task of the plurality of tasks (S6); i. determining one respective perturbed evaluation result of the plurality of perturbed evaluation results for the identified at least one at least one perturbed evaluation result, which is closest to the at least one unperturbed evaluation result as violation perturbed evaluation result for each task of the plurality of tasks, if at least one perturbed evaluation result of the plurality of perturbed evaluation results is identified (S7); j. determining an overall violation perturbed evaluation result based on the at least one violation perturbed evaluation result for the plurality of tasks (S8); k. comparing the overall violation perturbed evaluation result with the second specified performance threshold (S9); and I. identifying the pre-trained model as robust as test result, if the overall violation degree is lower than the second specified performance threshold (S10).

Further, the invention relates to a corresponding computer program product and technical system.

## Description

### 1. Technical field

The present invention relates to a computer-implemented method for testing a robustness of a pre-trained model. Further, the invention relates to a corresponding computer program product and technical system.

### 2. Prior art

Currently there is a trend of digitalization in the industry domain. Hence, e.g. a manufacturing process for a product may be digitally controlled. For describing several facets of this trend the term "Industry 4.0" (in German: "Industrie 4.0") is a commonly used. It has become not only a major part of today's industry, but it also drives the business in many industrial domains.

Considering complex industrial plants, the industrial plants usually comprise distinct parts, modules or units with a multiplicity of individual functions. Exemplary units include sensors and actuators. The units and functions have to be controlled and regulated in an interacting manner. They are often monitored, controlled and regulated by automation systems. The units can either exchange data directly with one another or communicate via a bus system. The units are connected to the bus system via parallel or, more often, serial interfaces.

The increasing digitalization allows for manufacturing or industrial installation of products in a production line of the industrial plant to be performed by robot units or other autonomous units in an automatic manner and thus efficiently at least in part up to now. Thereby, machine learning is crucial and a rapidly growing field. It is often utilized for safety-critical applications e.g. in manufacturing for e.g. controlling the robot units. Machine learning is well known from the prior art in context of Artificial Intelligence. According to which, the Artificial Intelligence systems are software programs whose behavior is learned from data instead of being explicitly programmed. The learning process is called "training" which requires plenty of data and significant computational resources.

The malfunction of a safety-critical application running on the robot unit often has a severe and negative impact on the underlying industrial plant. It can lead to a fall out of the associated robot unit in the manufacturing process. This disadvantageously results in downtimes of the industrial plant and tremendous costs.

It remains a challenge that the robustness of the machine learning models is tested and guaranteed, thereby avoiding any malfunctioning of the safety-critical applications and negative consequences. According to prior art, known robustness testing techniques address mainly the robustness of the machine learning model against a certain specific task. The evaluation of the robustness of the machine learning model against perturbations is however less investigated in multiple different tasks.

It is therefore an objective of the invention to provide a computer-implemented method for testing a robustness of a pre-trained model, which is more efficient and more reliable.

### 3. Summary of the invention

This problem is according to one aspect of the invention solved by a computer-implemented method for testing a robustness of a pre-trained model, comprising the steps:
a. providing the pre-trained model;
b. providing a plurality of tasks for the pre-trained model; wherein
c. each task of the plurality of tasks is assigned to at least one unperturbed evaluation result of a performance of the pre-trained model; wherein
   the pre-trained model is evaluated with at least one unperturbed data sample; wherein
d. each task of the plurality of tasks is assigned to a plurality of perturbed evaluation results of the performance of the pre-trained model for different perturbation degrees; wherein
   the pre-trained model is evaluated with a plurality of perturbed data samples by different perturbation degrees;
e. providing a first specified performance threshold;
f. providing a second specified performance threshold;
g. comparing each perturbed evaluation result of the plurality of perturbed evaluation results of the different perturbation degrees with the first specified performance threshold for each task of the plurality of tasks;
h. identifying any perturbed evaluation result of the plurality of perturbed evaluation results of the different perturbation degrees, which is lower than the first specified performance threshold for each task of the plurality of tasks;
i. determining one respective perturbed evaluation result of the plurality of perturbed evaluation results for the identified at least one at least one perturbed evaluation result, which is closest to the at least one unperturbed evaluation result as violation perturbed evaluation result for each task of the plurality of tasks,
   if at least one perturbed evaluation result of the plurality of perturbed evaluation results is identified;
j. determining an overall violation perturbed evaluation result based on the at least one violation perturbed evaluation result for the plurality of tasks;
k. comparing the overall violation perturbed evaluation result with the second specified performance threshold; and
l. identifying the pre-trained model as robust as test result, if the overall violation degree is lower than the second specified performance threshold.

Accordingly, the invention is directed to a computer-implemented method for testing a robustness of a pre-trained model.

First, the input data is provided, namely the pre-trained model, the tasks and the two distinct performance thresholds.

Thereby, the model is preferably designed as a machine learning model, which could be already trained. The machine learning model can be a supervised or an unsupervised machine learning model. Usually, the machine learning model is trained on a specific task based on the training data. Thereby, the task can be interpreted as any task, preferably few-shot learning task. In other words, preferably the tasks are in line with few-shot learning and are in this case few-shot learning task.

In the context of few-shot learning, a "task" refers to a specific learning problem that the model is asked to solve. In traditional machine learning, a task might involve training a model on a large dataset with labeled examples to learn a specific classification or regression function. In few-shot learning, however, the model is trained with only a limited number of examples or shots. For instance, a first task could be to differentiate between objects of classes A v.s. B, and a second task to differentiate C v.s. D. The idea of few-shot learning in this regard is to learn the two tasks with very few samples of the respective classes.

For example, ten objects can be collected from an industrial factory. In few-shot learning, the tasks can be defined for a five class object classification. Each time when five objects are sampled out of the pool of ten objects, this is defined as a new task. In other words, the tasks can be designed for a five class object classification, but with different concrete objects defined for that task.

The tasks are each assigned to unperturbed and perturbed evaluation results. Preferably, one task is assigned to one unperturbed evaluation result as a baseline and a plurality of distinct perturbed evaluation results of distinct perturbation degrees.

The perturbation degree is a parameterization of the strength with which the input data are perturbed. For instance, an image can be rotated by 2 degrees. It can be expected that the model retains its performance but a rotation of 30 degrees might be very challenging for a trained model unless it has seen similar samples during the training (e.g. via data augmentation).

The evaluation results refer to the performance of the pre-trained model. The performance can be e.g. accuracy, precision and recall. In other words, the performance of the pre-trained model is evaluated resulting in the evaluation results. The pre-trained model is evaluated with perturbed data samples or unperturbed data samples. The perturbed data samples are data samples which are perturbed by at least one perturbation. The data samples refer to the test data samples in an evaluation dataset.

The perturbation can be defined as a transformation function. The transformation function can map a data point from and to its own feature space, while changing certain characteristics or features. For instance, the lighting of an image is a perturbation function that increases the RGB values in all pixels. The perturbation can be a natural perturbation, such as a change of lighting conditions, a color saturation and a blurring effect. The performance thresholds are prespecified.

The input data can be received and/or transmitted via one or more input interfaces of a technical unit or technical system, wherein the technical unit can be designed as any computing unit. Additionally or alternatively, the output data in form of the test result can be sent via one or more output interfaces. This way, data can be efficiently transmitted between computing units reducing data traffic and allowing for bidirectional data exchange. The input data and/or output data can be extended with additional data or information.

The input data is provided or received as input for the subsequent method steps.

Each perturbed evaluation result of the plurality of perturbed evaluation results of the different perturbation degrees is compared with the first specified performance threshold for each task of the plurality of tasks.

Any perturbed evaluation result of the plurality of perturbed evaluation results of the different perturbation degrees is identified, which is lower than the first specified performance threshold for each task of the plurality of tasks.

One respective perturbed evaluation result of the plurality of perturbed evaluation results for the identified at least one at least one perturbed evaluation result is determined, which is closest to the at least one unperturbed evaluation result as violation perturbed evaluation result for each task of the plurality of tasks,
if at least one perturbed evaluation result of the plurality of perturbed evaluation results is identified.

An overall violation perturbed evaluation result is determined based on the at least one violation perturbed evaluation result for the plurality of tasks.

The overall violation perturbed evaluation result is compared with the second specified performance threshold.

Accordingly, two distinct comparisons are performed with the respective thresholds. First, the respective tasks are individually taken into account. The perturbed evaluation results are determined for a task on the individual basis, which are lower than the first specified performance threshold. These perturbed evaluation results are worse than the first specified performance threshold. In other words, the performance of the perturbed evaluation result is worse than the specified performance and target. According to which, a performance drop and hence violation is determined. In case of violation, the perturbed evaluation result, which is closest to the at least one unperturbed evaluation result, is determined as violation perturbed evaluation result.

Then, the overall violation degree is determined based on the determined violation perturbed evaluation results. The second comparison and robustness test are performed based on the overall violation degree for all tasks of the plurality of tasks. The test results in the test result.

The pre-trained model is identified as robust as test result, if the overall violation degree is lower than the second specified performance threshold.

The present invention allows for robustness testing of pre-trained models in multiple different tasks in an efficient and reliable manner. The robustness testing of pre-trained models can be performed for industrial few-shot learning tasks.

The test results can serve as an important criterion to select between multiple pre-trained models. The test results can provide insights for model monitoring mechanisms. If the pre-trained model is tested to be not robust against a change of lighting conditions, a monitoring mechanism will be advantageously incorporated for the environmental brightness. The pre-trained model can be improved depending on the test results. If the pre-trained model is tested to be not robust against a change of lighting conditions, more variations will be advantageously added in terms of a lighting condition into the training set.

In an aspect the pre-trained model is a fine-tuned model. Accordingly, the pre-trained model can undergo fine-tuning with regard to a specific task. The fine-tuning has been proven to be advantageous in view of performance.

In a further aspect the tasks of the plurality of tasks are sampled from a task pool.

In a further aspect the fine-tuning is performed for each task of the plurality of tasks. Accordingly, the plurality of tasks can be sampled from the task pool. Then, the pre-trained model can be fine-tuned for each sampled task of the sampled plurality of tasks. Then, after fine-tuning, the model evaluation can be performed resulting in the perturbed and unperturbed evaluation results.

In a further aspect the plurality of tasks, the at least one unperturbed evaluation result and the plurality of perturbed evaluation results are provided in form of a table or a matrix, wherein the table or the matrix comprises the tasks as rows and the evaluation results as columns. Accordingly, the matrix or table can be provided as input. This format is advantageous in view of an efficient processing of the input data, such as an efficient comparison.

In a further aspect the first specified performance threshold is defined as the unperturbed evaluation result of the performance of the pre-trained model minus a tolerated performance drop of the pre-trained model.

In a further aspect the overall violation perturbed evaluation result is the median or mean of the at least one violation perturbed evaluation results.

In a further aspect the method further comprises
- providing the pre-trained model, the plurality of tasks, the at least one unperturbed evaluation result, the plurality of perturbed evaluation results, the first specified performance threshold, the second specified performance threshold, the tested pre-trained model, the test result comprising the information with regard to robustness and/or any other related data;
- Outputting the pre-trained model, the plurality of tasks, the at least one unperturbed evaluation result, the plurality of perturbed evaluation results, the first specified performance threshold, the second specified performance threshold, the tested pre-trained model, the test result comprising the information with regard to robustness and/or any other related data;
- Storing the pre-trained model, the plurality of tasks, the at least one unperturbed evaluation result, the plurality of perturbed evaluation results, the first specified performance threshold, the second specified performance threshold, the tested pre-trained model, the test result comprising the information with regard to robustness and/or any other related data in a storage unit;
- Displaying the pre-trained model, the plurality of tasks, the at least one unperturbed evaluation result, the plurality of perturbed evaluation results, the first specified performance threshold, the second specified performance threshold, the tested pre-trained model, the test result comprising the information with regard to robustness and/or any other related data on a display unit; and/or
- Transmitting the pre-trained model, the plurality of tasks, the at least one unperturbed evaluation result, the plurality of perturbed evaluation results, the first specified performance threshold, the second specified performance threshold, the tested pre-trained model, the test result comprising the information with regard to robustness and/or any other related data to a computing unit.

Accordingly, the input data, data of intermediate method steps and/or resulting output data in the form of the test result can be further handled. Therefore, the method according to an embodiment comprises one or more method steps.

This way, the method steps can be flexibly selected and triggered in an efficient manner. The selection of the steps can depend on criteria, such as application, use case and/or user requirement etc. Moreover, any of the aforementioned method steps can be performed by one or more computing units of the technical system. The method steps can be performed gradually or simultaneously. The method steps include e.g. storing and processing steps. The advantage is that appropriate steps can be taken in a timely manner.

For example, the test result can be immediately outputted and/or displayed to a user by means of a display unit. The test result can be extended with further information.

In a further aspect the method further comprises
- Rejecting or releasing the pre-trained model depending on the test result; wherein
the rejection or the release is preferably performed after an evaluation of the test result by a computing unit or a user.

Accordingly, the test result can be either rejected and hence not released or released and hence confirmed. The test result can be transmitted to e.g. a display unit of a computing unit for evaluation and confirmation by a user. Moreover, the test result can be automatically evaluated and confirmed. The evaluation can be interpreted as processing, reviewing or analyzing. The evaluation is preferably performed as additional check before any release of the pre-trained model and hence application of the pre-trained model. The additional check can be interpreted as additional test.

For example, the test result is positive in the sense that the pre-trained model is identified as robust. This positive test result is afterwards additionally evaluated and confirmed by the user or computing unit.

In a further aspect the pre-trained model is released, if the pre-trained model is identified as robust as test result.

In a further aspect the pre-trained model is rejected, if the pre-trained model is identified as not robust as test result.

In a further aspect the method further comprises
- Monitoring the pre-trained model after rejection;
- Training the pre-trained model after rejection; and/or
- Adapting at least one perturbed data sample, at least one unperturbed data sample, at least one perturbation degree of the pre-trained model, the pre-trained model after rejection.

Accordingly, the test result is negative in the sense that the pre-trained model is identified as not robust. In this case, the pre-trained model and/or any other data can be further handled and improved. The testing can be repeated after this improvement.

The advantage is that solely tested and robust pre-trained models are released and executed. The additional test or checks improve the robustness testing and the reliability of the pre-trained model.

A further aspect of the invention is a computer program product directly loadable into an internal memory of a computer, comprising software code portions for performing the steps according to any one of the preceding claims when said computer program product is running on a computer.

A further aspect of the invention is a technical unit for
performing the aforementioned method.

The technical unit may be realized as any device, or any means, for computing, in particular for executing a software, an app, or an algorithm. For example, the unit may comprise a central processing unit (CPU) and a memory operatively connected to the CPU. The unit may also comprise an array of CPUs, an array of graphical processing units (GPUs), at least one application-specific integrated circuit (ASIC), at least one field-programmable gate array, or any combination of the foregoing. The unit may comprise at least one module which in turn may comprise software and/or hardware. Some, or even all, modules of the unit may be implemented by a cloud computing platform.

### 4. Short description of the drawings

In the following detailed description, presently preferred embodiments of the invention are further described with reference to the following figures:
Fig. 1 illustrates a flowchart of the method according to the invention.
Fig. 2 shows a flowchart for generating a table for the tasks and evaluation results according to an embodiment.
Fig. 3 shows the generated table according to an embodiment.
Fig. 4 illustrates a flowchart of the method according to an embodiment.

### 5. Detailed description of preferred embodiments

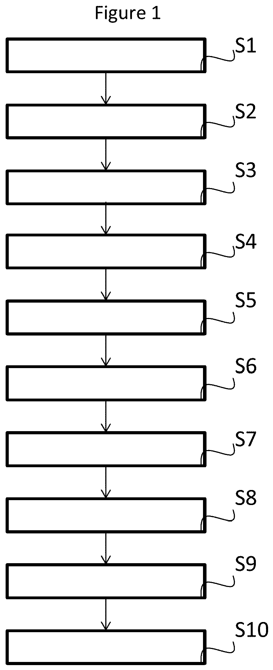

Fig. 1 illustrates a flowchart of the method with the method steps S1 to S10 according to the invention.

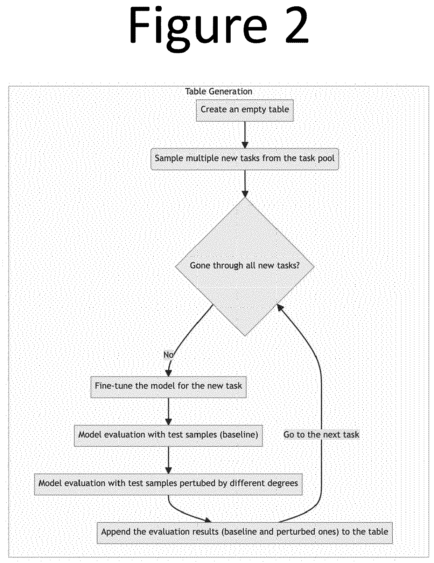

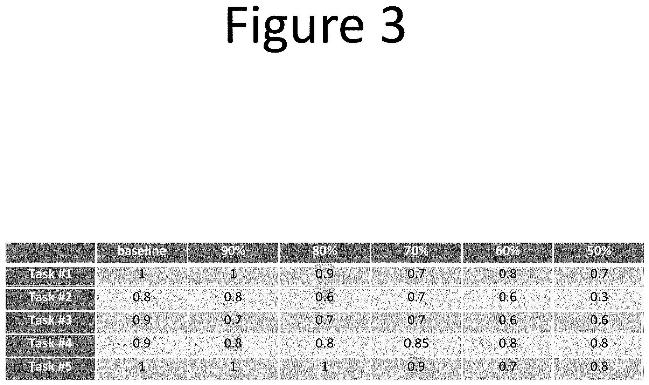

Fig. 2 shows a flowchart for generating a table for the tasks and evaluation results. First, a plurality of tasks is generated. Preferably, the tasks are sampled from the task pool. Then, the pre-trained model is fine-tuned for the task for each task of the plurality of tasks. The performance of the pre-trained model is evaluated with unperturbed and perturbed data samples, resulting in the unperturbed and perturbed evaluation results. The results are appended to the table. Hence, the generated table comprises the tasks as rows and the evaluation results as columns, as depicted in Figure 3. The table according to Figure 3 uses the following threshold definition:
Perturbation threshold T = 70%: The domain expert cannot correctly conduct tasks when the brightness is reduced to 70%.
Tolerated performance drop D =0.05
The classifier is still considered as good as the original if the performance doesn't drop more than D.
Violation degrees: 80%, 80%, 90%, 90%, 70%
Median of the violation degrees: M = 80%
M > T: It can be concluded that the classifier is not robust.

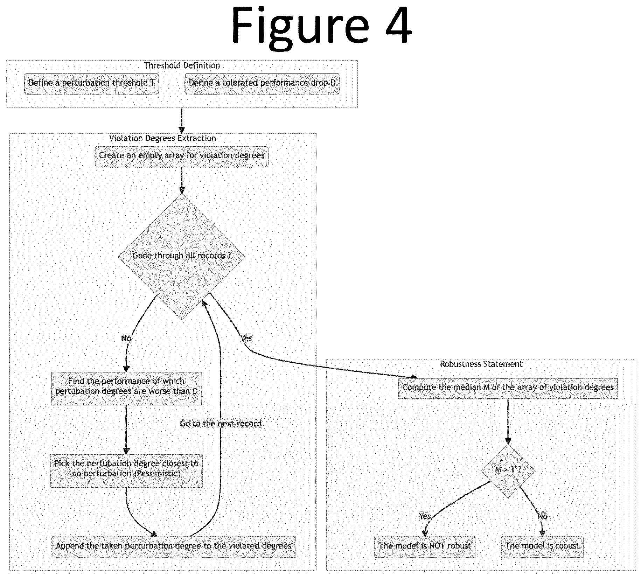

Fig. 4 illustrates a flowchart of the method according to an embodiment. The generated table is used as input for testing the robustness of the pre-trained model.

### Threshold definition

The first and second performance thresholds are specified and provided. The thresholds can be aligned with domain experts, e.g. in consideration of e.g. use cases.

For example, an image classification task can be analyzed under the change of lighting conditions as perturbations. Different perturbation degrees can be applied on the exemplary data sample. The respective perturbation degree might be a good candidate for the perturbation threshold, if it is not possible to tell what is on the image.

For the tolerated performance drop can be defined as 5% for a test set with approx. 20 data samples. This performance drop corresponds to one wrong prediction.

### Robustness testing

The table records are extracted from the generated table for the comparison according to the left side of Figure 4. A first comparison is performed. The robustness testing is performed according to the right side of Figure 4. A second comparison is performed.

## Claims

1. Computer-implemented method for testing a robustness of a pre-trained model, comprising the steps:
a. providing the pre-trained model (S1);
b. providing a plurality of tasks for the pre-trained model (S2); wherein
c. each task of the plurality of tasks is assigned to at least one unperturbed evaluation result of a performance of the pre-trained model; wherein
the pre-trained model is evaluated with at least one unperturbed data sample; wherein
d. each task of the plurality of tasks is assigned to a plurality of perturbed evaluation results of the performance of the pre-trained model for different perturbation degrees; wherein
the pre-trained model is evaluated with a plurality of perturbed data samples by different perturbation degrees;
e. providing a first specified performance threshold (S3);
f. providing a second specified performance threshold (S4);
g. comparing each perturbed evaluation result of the plurality of perturbed evaluation results of the different perturbation degrees with the first specified performance threshold for each task of the plurality of tasks (S5);
h. identifying any perturbed evaluation result of the plurality of perturbed evaluation results of the different perturbation degrees, which is lower than the first specified performance threshold for each task of the plurality of tasks (S6);
i. determining one respective perturbed evaluation result of the plurality of perturbed evaluation results for the identified at least one at least one perturbed evaluation result, which is closest to the at least one unperturbed evaluation result as violation perturbed evaluation result for each task of the plurality of tasks,
if at least one perturbed evaluation result of the plurality of perturbed evaluation results is identified (S7);
j. determining an overall violation perturbed evaluation result based on the at least one violation perturbed evaluation result for the plurality of tasks (S8);
k. comparing the overall violation perturbed evaluation result with the second specified performance threshold (S9); and
l. identifying the pre-trained model as robust as test result, if the overall violation degree is lower than the second specified performance threshold (S10).

2. Computer-implemented method according to claim 1, wherein the pre-trained model is a fine-tuned model.

3. Computer-implemented method according to claim 1 or claim 2, wherein the tasks of the plurality of tasks are sampled from a task pool.

4. Computer-implemented method according to any of the preceding claims, wherein the fine-tuning is performed for each task of the plurality of tasks.

5. Computer-implemented method according to any of the preceding claims, wherein the plurality of tasks, the at least one unperturbed evaluation result and the plurality of perturbed evaluation results are provided in form of a table or a matrix, wherein
the table or the matrix comprises the tasks as rows and the evaluation results as columns.

6. Computer-implemented method according to any of the preceding claims, wherein the first specified performance threshold is defined as the unperturbed evaluation result of the performance of the pre-trained model minus a tolerated performance drop of the pre-trained model.

7. Computer-implemented method according to any of the preceding claims, wherein the overall violation perturbed evaluation result is the median or mean of the at least one violation perturbed evaluation results.

8. Computer-implemented method according to any of the preceding claims, wherein the method further comprises
- providing the pre-trained model, the plurality of tasks, the at least one unperturbed evaluation result, the plurality of perturbed evaluation results, the first specified performance threshold, the second specified performance threshold, the tested pre-trained model, the test result comprising the information with regard to robustness and/or any other related data;
- Outputting the pre-trained model, the plurality of tasks, the at least one unperturbed evaluation result, the plurality of perturbed evaluation results, the first specified performance threshold, the second specified performance threshold, the tested pre-trained model, the test result comprising the information with regard to robustness and/or any other related data;
- Storing the pre-trained model, the plurality of tasks, the at least one unperturbed evaluation result, the plurality of perturbed evaluation results, the first specified performance threshold, the second specified performance threshold, the tested pre-trained model, the test result comprising the information with regard to robustness and/or any other related data in a storage unit;
- Displaying the pre-trained model, the plurality of tasks, the at least one unperturbed evaluation result, the plurality of perturbed evaluation results, the first specified performance threshold, the second specified performance threshold, the tested pre-trained model, the test result comprising the information with regard to robustness and/or any other related data on a display unit; and/or
- Transmitting the pre-trained model, the plurality of tasks, the at least one unperturbed evaluation result, the plurality of perturbed evaluation results, the first specified performance threshold, the second specified performance threshold, the tested pre-trained model, the test result comprising the information with regard to robustness and/or any other related data to a computing unit.

9. Computer-implemented method according to any of the preceding claims, wherein the method further comprises
- Rejecting or releasing the pre-trained model depending on the test result; wherein
the rejection or the release is preferably performed after an evaluation of the test result by a computing unit or a user.

10. Computer-implemented method according to claim 9, wherein
the pre-trained model is released, if the pre-trained model is identified as robust as test result.

11. Computer-implemented method according to claim 9, wherein
the pre-trained model is rejected, if the pre-trained model is identified as not robust as test result.

12. Computer-implemented method according to claim 9 or claim 11, wherein the method further comprises
- Monitoring the pre-trained model after rejection;
- Training the pre-trained model after rejection; and/or
- Adapting at least one perturbed data sample, at least one unperturbed data sample, at least one perturbation degree of the pre-trained model, the pre-trained model after rejection.

13. A computer program product directly loadable into an internal memory of a computer, comprising software code portions for performing the steps according to any one of the preceding claims when said computer program product is running on a computer.

14. Technical system for performing the method according to claims 1 - 12.
